# EUROPÄISCHE PATENTANMELDUNG

(11) **EP 4 656 997 A1**
(43) Veröffentlichungstag der Anmeldung: **03.12.2025**
(21) Anmeldenummer: 25175389.3
(22) Anmeldetag: 09.05.2025
(51) Int. Cl.: F28D 7/04, F28D 20/00, F28F 9/013, F28D 20/02, F28D 7/02

(54) **WASSERWÄRMETAUSCHER SOWIE ENERGIESPEICHER**

(30) Priorität: 27.05.2024 DE 102024114783
(71) Anmelder: Max Boegl Wind AG, 92369 Sengenthal (DE)
(72) Erfinder: ZINNER, Joerg, 93195 Wolfsegg (DE); CZERWEK, Florian, 90518 Altdorf b. Nuernberg (DE)
(74) Vertreter: Canzler & Bergmeier Patentanwälte Partnerschaft mbB

(57) **Zusammenfassung**

Die Erfindung betrifft einen Wasserwärmetauscher (1) für einen Energiespeicher (2), mit wenigstens einer Leitung (3), mit deren Hilfe im bestimmungsgemäßen Gebrauch des Wasserwärmetauschers (1) eine Wärmeträgerflüssigkeit transportierbar ist, wobei die wenigstens eine Leitung (3) wenigstens einen sich zumindest teilweise entlang einer Radialrichtung (4) zwischen einer Innenseite (5) und einem Außenrand (6) des Wasserwärmetauschers (1) erstreckenden Leitungsabschnitt (12, 13) umfasst und wobei die wenigstens eine Leitung (3) einen Vorlauf (7) und einen Rücklauf (8) umfasst, die im Bereich der Innenseite (5) oder des Außenrands (6) angeordnet sind. Erfindungsgemäß ist die wenigstens eine Leitung (3) mit gleichbleibender Wickelrichtung (9) spiralförmig und/oder schneckenförmig gewickelt und/oder sind die wenigstens eine Leitung (3) umfasst wenigstens zwei der Leitungsabschnitte (12, 13), wobei die wenigstens zwei Leitungsabschnitte (12, 13) auf unterschiedlichen Ebenen (10, 11) des Wasserwärmetauschers (1) angeordnet sind. Des Weiteren betrifft die Erfindung einen Energiespeicher (2).

## Beschreibung

Die vorliegende Erfindung betrifft einen Wasserwärmetauscher für einen Energiespeicher, mit wenigstens einer Leitung, mit deren Hilfe im bestimmungsgemäßen Gebrauch des Wasserwärmetauschers eine Wärmeträgerflüssigkeit transportierbar ist, wobei die wenigstens eine Leitung wenigstens einen sich zumindest teilweise entlang einer Radialrichtung zwischen einer Innenseite und einem Außenrand des Wasserwärmetauschers erstreckenden Leitungsabschnitt umfasst, und wobei die wenigstens eine Leitung einen Vorlauf und einen Rücklauf umfasst, die im Bereich der Innenseite oder des Außenrands angeordnet sind.

Aus der EP 2 614 330 B1 ist eine Speichertankeinrichtung für ein Energiespeichersystem bekannt. In einem Ausführungsbeispiel sind Anschlüsse für Vorlauf und Rücklauf des Wärmeüberträgers bzw. der Leitung für die Wärmeüberträgerflüssigkeit am Außenrand einer Ebene angeordnet. Die Leitung ist hierfür teilweise spiralförmig ausgebildet, wobei sich an der Innenseite des Wasserwärmetauschers die Biegerichtung bzw. Wickelrichtung der Leitung ändert. Nachteilig hieran ist, dass das Biegen der Leitung dadurch nur mit hohem Aufwand möglich ist. Zusätzlich geht dadurch sehr viel Bauraum verloren.

Aufgabe der vorliegenden Erfindung ist es, die aus dem Stand der Technik bekannten Nachteile zu beseitigen. Aufgabe ist es insbesondere einen Energiespeicher zu schaffen, dessen Herstellung erleichtert und/oder Effizienz gesteigert ist.

Die Aufgabe wird gelöst durch einen Wasserwärmetauscher sowie einen Energiespeicher mit den Merkmalen der unabhängigen Patentansprüche oder des unabhängigen Patentanspruchs. Vorteilhafte oder bevorzugte Ausführungen oder Weiterbildungen der Erfindung sind durch die Merkmale der abhängigen Ansprüche gekennzeichnet.

Vorgeschlagen wird ein Wasserwärmetauscher, insbesondere für einen Energiespeicher. Vorzugsweise ist der Wasserwärmetauscher im bestimmungsgemäßen Gebrauch in einer in einem Behälter des Energiespeichers aufgenommenen Flüssigkeit angeordnet. Diese Anordnung ermöglicht eine effiziente Wärmeübertragung zwischen der Flüssigkeit im Behälter und dem Wasserwärmetauscher. Der Wasserwärmetauscher umfasst vorzugsweise wenigstens eine Leitung, mit deren Hilfe im bestimmungsgemäßen Gebrauch des Wasserwärmetauschers eine Wärmeträgerflüssigkeit transportierbar ist. Dies führt zu einer stabilen und gleichmäßigen Wärmeübertragung, wodurch ein effizientes Gesamtsystem resultiert. Vorzugsweise ist der Energiespeicher als Latentwärmespeicher, insbesondere als Eisspeicher, ausgebildet.

Die wenigstens eine Leitung umfasst vorzugsweise wenigstens einen sich zumindest teilweise entlang einer Radialrichtung zwischen einer Innenseite und einem Außenrand des Wasserwärmetauschers erstreckenden Leitungsabschnitt. Dies maximiert die Kontaktfläche zwischen der Leitung und der aufgenommenen Flüssigkeit, was die Wärmeübertragungseffizienz steigert. Zusätzlich oder alternativ umfasst die wenigstens eine Leitung einen Vorlauf und einen Rücklauf, die vorzugsweise im Bereich der Innenseite oder des Außenrands angeordnet sind.

Vorzugsweise sind sowohl der Vorlauf, als auch der Rücklauf im Bereich des Außenrands angeordnet. Dies hat den Vorteil, dass beide Anschlüsse gut zugänglich sind. Ein Monteur kann die Verbindung zum jeweiligen Verteiler direkt am Außenrand herstellen, ohne Arbeiten im Inneren bzw. an der Innenseite des Wasserwärmetauschers durchführen zu müssen. Diese Anordnung bringt einerseits eine Zeitersparnis mit sich und verbessert andererseits die Arbeitssicherheit, da kein Betreten der Innenseite erforderlich ist.

Alternativ sind sowohl der Vorlauf, als auch der Rücklauf im Bereich der Innenseite angeordnet. Diese Anordnung bietet insbesondere dann Vorteile, wenn aus gestalterischen oder konstruktiven Gründen eine kompakte Bauweise gewünscht ist oder der Außenbereich anderweitig genutzt werden soll. Zudem kann eine innenseitige Verlegung zu einem geschützten Verlauf der Leitungen beitragen.

Vorzugsweise ist die wenigstens eine Leitung mit gleichbleibender Wickelrichtung spiralförmig und/oder schneckenförmig gewickelt. Beispielsweise kann die wenigstens eine Leitung vollständig spiralförmig und/oder schneckenförmig ausgebildet sein. Die allgemeine spiralförmige und/oder schneckenförmige Ausgestaltung der wenigstens einen Leitung erhöht die Länge und dadurch die Kontaktfläche der Leitung mit der Flüssigkeit im Behälter, was zu einer effektiveren Wärmeübertragung führt. Durch die gleichbleibende Wickelrichtung kann zusätzlich oder alternativ der Bauraum innerhalb des Behälters bzw. von der Innenseite bis zum Außenrand des Wasserwärmetauschers maximal ausgenutzt werden. Dies ermöglicht eine optimale Ausnutzung des verfügbaren Raums und führt zu einer weiteren Steigerung der Effizienz.

Als spiralförmig und/oder schneckenförmig können runde oder eckige Spiralen und/oder Schnecken verstanden werden. Vorzugsweise bestimmt der Behälter der Flüssigkeit des Energiespeichers die Form des Außenrands der spiralförmigen und/oder schneckenförmigen Leitung. Dadurch wird die Passgenauigkeit des Wasserwärmetauschers im Behälter maximiert, was die Installation vereinfacht und/oder die Effizienz steigert.

Zusätzlich oder alternativ umfasst die wenigstens eine Leitung wenigstens zwei der Leitungsabschnitte, wobei die wenigstens zwei Leitungsabschnitte vorzugsweise auf unterschiedlichen Ebenen des Wasserwärmetauschers angeordnet sind. Dies ermöglicht eine mehrschichtige Wärmeübertragung und optimiert so den thermischen Wirkungsgrad des Gesamtsystems. Als Ebenen werden die Lagen der Leitungsabschnitte genannt. Diese sind meist entlang einer Hochrichtung des Wasserwärmetauschers übereinander angeordnet und/oder in Schichten aufgebaut. Die wenigstens eine Leitung erstreckt sich dabei vorzugsweise über zwei Ebenen, wobei jeder der zwei Leitungsabschnitte, insbesondere eben und/oder vollständig, auf jeweils einer der Ebenen verläuft. Dadurch, dass die wenigstens zwei Leitungsabschnitte auf unterschiedlichen Ebenen verlaufen, kann der Verlauf der einzelnen Leitungsabschnitte entlang der Radialrichtung freier ausgestaltet werden.

So ist vorzugsweise der Vorlauf an einem der zwei Leitungsabschnitte, insbesondere an einem ersten Leitungsabschnitt, und der Rücklauf an dem anderen der zwei Leitungsabschnitte, insbesondere am zweiten Leitungsabschnitt angeordnet. Unter anderem kann durch die Anordnung der zwei Leitungsabschnitte in unterschiedlichen Ebenen der Verlauf der wenigstens einen Leitung mit gleichbleibender Wickelrichtung erleichtert werden.

Vorteile bringt es zudem mit sich, wenn der wenigstens eine Leitungsabschnitt und/oder die wenigstens eine Leitung zumindest teilweise und/oder annäherungsweise als archimedische Spirale ausgebildet ist. Die archimedische Spirale gewährleistet eine gleichmäßige Wärmeübertragung entlang der Leitung, was zu einer verbesserten thermischen Effizienz führt. Zudem kann dadurch der Bauraum innerhalb des Behälters maximal genutzt werden. Zusätzlich oder alternativ trägt dies zu einer möglichst gleichmäßigen Biegebeanspruchung beim Wickeln der Leitung bei.

Des Weiteren ist es vorteilhaft, wenn ein erster Leitungsabschnitt der wenigstens zwei Leitungsabschnitte auf einer ersten Ebene und/oder ein zweiter Leitungsabschnitt der wenigstens zwei Leitungsabschnitte auf einer zweiten Ebene verläuft. Durch die Nutzung mehrerer Ebenen kann die Oberfläche für die Wärmeübertragung vergrößert und somit die Effizienz des Wasserwärmetauschers weiter erhöht werden.

Vorteile bringt es mit sich, wenn die unterschiedlichen Ebenen, insbesondere die erste Ebene und die zweite Ebene, parallel zueinander angeordnet sind und/oder eine Wickelachse der wenigstens einen Leitung normal zu der wenigstens einen Ebene verläuft. Die parallele Anordnung und die normale Ausrichtung der Wickelachse gewährleisten einen gleichbleibenden Abstand der Leitungen und/oder der Leitungsabschnitte zueinander. Dies erleichtert die Montage. Zusätzlich oder alternativ kann dadurch ungewollter Kontakt zwischen den Leitungen und/oder Leitungsabschnitten verhindert werden.

Vorteilhaft ist es zudem, wenn der Vorlauf am ersten Leitungsabschnitt und/oder der Rücklauf am zweiten Leitungsabschnitt angeordnet ist. Dadurch kann der Wärmefluss optimiert werden.

Ebenso bringt es Vorteile mit sich, wenn die wenigstens zwei Leitungsabschnitte mit einem Übergangsabschnitt verbunden sind. So kann die Wärmeträgerflüssigkeit von dem ersten Leitungsabschnitt zum zweiten Leitungsabschnitt transportiert werden, was eine effiziente Nutzung der Wärmeenergie sicherstellt.

Auch ist es vorteilhaft, wenn sich der Übergangsabschnitt von der ersten Ebene zur zweiten Ebene erstreckt. Dies ermöglicht einen nahtlosen und effizienten Wärmetransfer zwischen den Ebenen.

Vorteile bringt es mit sich, wenn der Übergangsabschnitt im Bereich der Innenseite oder des Außenrands des Wasserwärmetauschers angeordnet ist. Die optimale Platzierung des Übergangsabschnitts unterstützt eine effektive Wärmeleitung und minimiert thermische Verluste. Der Vorlauf und der Rücklauf ist dabei im Bereich des Außenrands oder der Innenseite angeordnet.

Auch ist es von Vorteil, wenn die Leitung als Rohr oder Schlauch ausgebildet ist. Diese Bauform ermöglicht eine flexible Anpassung an verschiedene Behälterformen und/oder vereinfacht die Installation.

Vorteile bringt es zudem mit sich, wenn der Wasserwärmetauscher wenigstens einen Verteiler, insbesondere einen Vorlaufverteiler und/oder einen Rücklaufverteiler, umfasst. Dies erleichtert die Verteilung der Wärmeträgerflüssigkeit und optimiert den Wärmefluss innerhalb des Systems. Zusätzlich oder alternativ können dadurch mehrere der Leitungen verbunden und/oder die Schnittstelle nach Außen geschaffen werden.

Auch ist es von Vorteil, wenn der wenigstens eine Verteiler mehrere Leitungen miteinander verbindet und/oder sich zumindest teilweise entlang einer in Richtung der Wickelachse erstreckenden Hochrichtung des Wasserwärmetauschers erstreckt. Dies ermöglicht eine effiziente Nutzung des Raums und eine gleichmäßige Verteilung der Wärme über die gesamte Länge des Wasserwärmetauschers. Zusätzlich oder alternativ können dadurch mehrere der Leitungen miteinander verbunden werden. So ist es zusätzlich oder alternativ denkbar, dass durch Variation des wenigstens einen Verteilers (insbesondere dessen Länge und/oder Anschlüsse für Leitungen) die Größe und/oder Kapazität des Wasserwärmetauschers angepasst werden kann.

Des Weiteren ist es vorteilhaft, wenn die erste Ebene und die zweite Ebene der wenigstens einen Leitung oder der mehreren Leitungen entlang der Hochrichtung des Wasserwärmetauschers, insbesondere gleichmäßig, voneinander beabstandet sind. Dies gewährleistet eine effiziente Wärmeübertragung zwischen den Ebenen.

Vorteilhaft ist es zudem, wenn der Wasserwärmetauscher wenigstens einen Halter mit wenigstens einem Aufnahmeabschnitt für die wenigstens eine Leitung umfasst. Dies stabilisiert die Positionierung der Leitungen und verbessert die Haltbarkeit und Sicherheit des gesamten Systems. Zusätzlich oder alternativ kann durch den wenigstens einen Halter die Montage des Wasserwärmetauschers vor der eigentlichen Montage des Energiespeichers gewährleistet werden. So kann der Wasserwärmetauscher, welcher die wenigstens eine Leitung und den wenigstens einen Halter umfasst, in einem zusammengebauten Zustand zum Bestimmungsort des Energiespeichers transportiert und als Einheit in den Behälter eingesetzt werden. Dies führt zu einer vereinfachten Herstellung des Energiespeichers. Zusätzlich oder alternativ kann dadurch gewährleistet werden, dass der Wasserwärmetauscher eine ausreichende Fertigungstoleranz aufweist.

Ebenso ist es vorteilhaft, wenn der Wasserwärmetauscher wenigstens zwei der Halter für die wenigstens zwei Leitungsabschnitte, insbesondere wenigstens einen ersten Halter für den wenigstens einen ersten Leitungsabschnitt und wenigstens einen zweiten Halter für den wenigstens einen zweiten Leitungsabschnitt, umfasst. Dies ermöglicht eine präzise und stabile Befestigung der wenigstens zwei Leitungsabschnitte und erleichtert die Wartung und Inspektion.

Vorteile bringt es mit sich, wenn jedem der Leitungsabschnitte wenigstens drei, vorzugsweise wenigstens sechs, Halter zugeordnet sind. Dies sorgt für eine gleichmäßige Unterstützung der Leitungen und verhindert mechanische Spannungen und Verformungen.

Auch ist es vorteilhaft, wenn im bestimmungsgemäßen Gebrauch des Wasserwärmetauschers an dem wenigstens einen ersten Halter wenigstens einer der zweiten Halter angeordnet ist, so dass wenigstens zwei Leitungsabschnitte mit Hilfe der Halter entlang der Hochrichtung miteinander verbindbar und/oder befestigbar sind. Dies vereinfacht den Aufbau und die Montage des Wasserwärmetauschers und ermöglicht eine flexible Anpassung an unterschiedliche Installationsanforderungen.

Vorteile bringt es mit sich, wenn jeder der aneinander angeordneten Halter wenigstens einen der Aufnahmeabschnitte umfasst, wobei vorzugsweise jeder Aufnahmeabschnitt des ersten Halters entlang einer Radialrichtung des Wasserwärmetauschers zu den Aufnahmeabschnitten des an den jeweiligen ersten Halter angeordneten zweiten Halters versetzt sind. Dies ermöglicht eine optimierte Platzierung der Leitungen und verbessert die Wärmeübertragungseffizienz. Zusätzlich oder alternativ kann dadurch der resultierende Versatz für die gleichbleibende Wickelrichtung ausgeglichen werden.

Vorteile bringt es zudem mit sich, wenn der wenigstens eine Halter, insbesondere die Aufnahmeabschnitte des wenigstens einen Halters, zu einer Mittelebene des Halters asymmetrisch ausgebildet ist. Dadurch können der erste Halter und der zweite Halter als Gleichteil bereitgestellt werden. Der Halter ist dabei als sogenanntes Wendeteil ausgebildet, das in einer Ausrichtung den ersten Halter und in der anderen Ausrichtung den zweiten Halter bereitstellt. Dies reduziert die Anzahl der benötigten Teile und vereinfacht die Lagerhaltung und/oder Montage.

Vorteilhaft ist es, wenn jeder der Halter wenigstens acht, vorzugsweise wenigstens zehn, beispielsweise zwölf, Aufnahmeabschnitte umfasst. Dadurch kann die wenigstens eine Leitung und/oder der wenigstens eine Leitungsabschnitt mehrfach aufgenommen werden.

Auch ist es von Vorteil, wenn der wenigstens eine Halter wenigstens einen Durchbruch, vorzugsweise mehrere Durchbrüche, umfasst, mit dessen Hilfe die Halter zueinander befestigt werden können. Dies ermöglicht eine sichere und dauerhafte Verbindung der Halter zueinander und verbessert die strukturelle Integrität des Wasserwärmetauschers.

Des Weiteren wird ein Energiespeicher vorgeschlagen. Vorteilhafterweise umfasst der Energiespeicher wenigstens einen Wasserwärmetauscher und/oder wenigstens einen Behälter. Vorzugsweise ist der Wasserwärmetauscher im bestimmungsgemäßen Gebrauch des Energiespeichers in einer im Behälter aufgenommenen Flüssigkeit angeordnet. Der Wasserwärmetauscher ist vorzugsweise gemäß der vorangegangenen Beschreibung ausgebildet, wobei die genannten Merkmale einzeln oder in beliebiger Kombination vorhanden sein können.

Weitere Vorteile der Erfindung sind in den nachfolgenden Ausführungsbeispielen beschrieben. Es zeigt:
- **Figur 1**: eine schematische Darstellung eines Systems mit einem Energiewandler und einem Energiespeicher,
- **Figur 2**: eine schematische Schnittdarstellung eines Wasserwärmetauschers gemäß einem Ausführungsbeispiel,
- **Figur 3**: eine schematische perspektivische Darstellung eines Wasserwärmetauschers gemäß einem alternativen Ausführungsbeispiel, und
- **Figur 4**: eine schematische, geschnittene Detailansicht eines Wasserwärmetauschers gemäß einem weiteren Ausführungsbeispiel.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

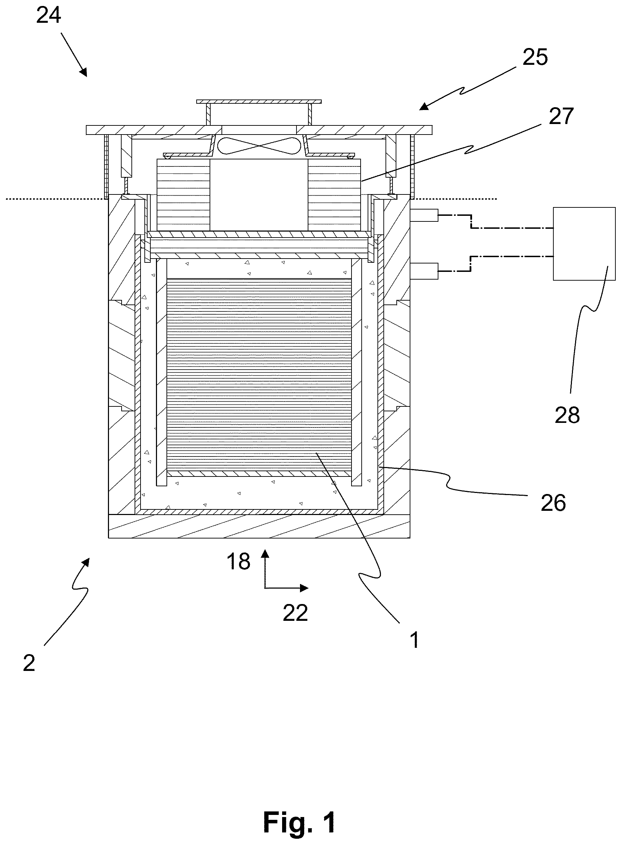

Figur 1 zeigt eine schematische Darstellung eines Systems 24 mit wenigstens einem teilweise geschnitten dargestellten Energiewandler 25 und einem teilweise geschnitten dargestellten Energiespeicher 2. Der wenigstens eine Energiespeicher umfasst wenigstens einen Wasserwärmetauscher 1. Die Ausgestaltung des wenigstens einen Wasserwärmetauschers 1 wird in den nachfolgenden Figuren näher erläutert.

In Figur 1 ist eine beispielhafte Anordnung des erfindungsgemäßen Wärmetauschers 1 dargestellt. So ist das System 24 mit dem wenigstens einen Energiewandler 25 und dem wenigstens einen Energiespeicher 2 als sogenannte Kombinationseinheit ausgebildet. Hierbei sind der wenigstens eine Energiewandler 25 und der wenigstens eine Energiespeicher 2 aneinander angeordnet. Ebenfalls ist es vorstellbar, dass der wenigstens eine Energiewandler 25 und der wenigstens eine Energiespeicher 2 als Einzelmodule ausgebildet und/oder voneinander beabstandet sind.

Figur 1 zeigt im Wesentlichen eine mögliche Einbausituation des erfindungsgemäßen Wasserwärmetauschers 1 in dem System 24. So umfasst der Energiespeicher 2 im Ausführungsbeispiel der Figur 1 mindestens einen Behälter 26 zur Aufnahme einer Flüssigkeit. In diesem Behälter 26 ist im bestimmungsgemäßen Gebrauch des Energiespeichers 2 der wenigstens eine Wasserwärmetauscher 1 angeordnet. So kann der Wasserwärmetauscher 1 der in dem Behälter 26 angeordneten Flüssigkeit Energie zu und/oder abführen.

Der Energiewandler 25 umfasst zumindest einen Luftwärmetauscher 27. Mit Hilfe eines Hydraulikmoduls 28 stehen der wenigstens eine Energiewandler 25 und der wenigstens eine Energiespeicher 2 miteinander in Wirkverbindung. So kann mit Hilfe des Energiewandlers 25 Energie aus der Umwelt gewandelt und mit Hilfe des Energiespeichers 2 und der im Behälter 26 angeordneten Flüssigkeit gespeichert werden.

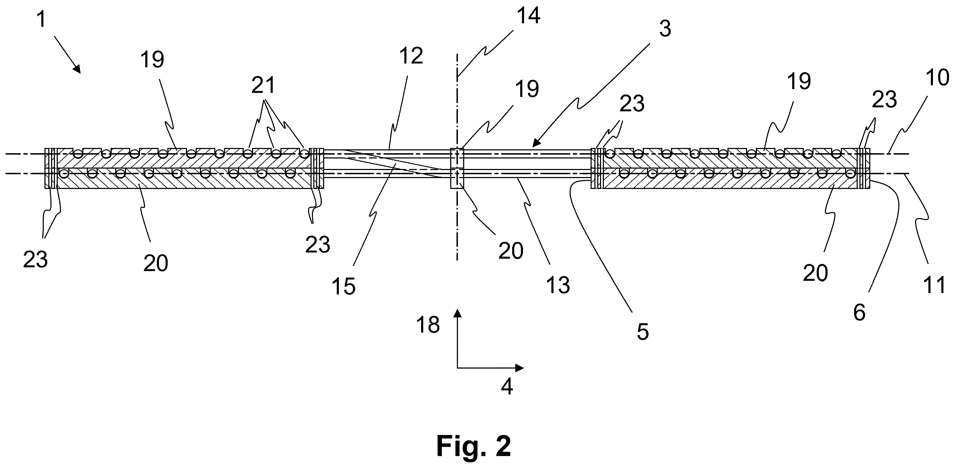

Figur 2 zeigt eine schematische Schnittdarstellung eines Wasserwärmetauschers 1 gemäß einem Ausführungsbeispiel. Der Wasserwärmetauscher 1 gemäß dem Ausführungsbeispiel der Figur 2 kann beispielsweise im Energiespeicher 2 des Ausführungsbeispiels der Figur 1 verwendet werden.

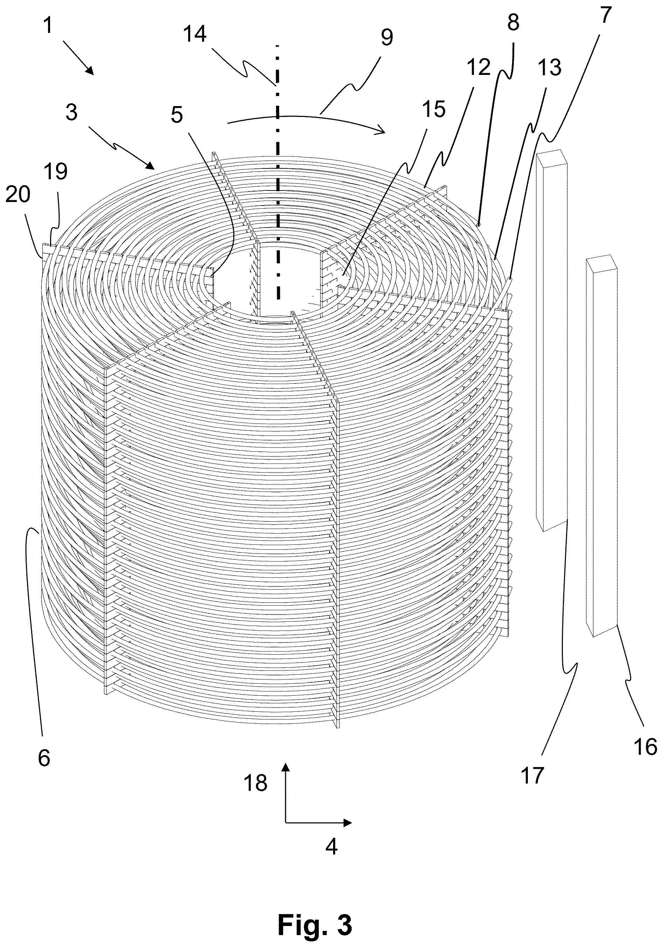

Im gezeigten Ausführungsbeispiel umfasst der Wasserwärmetauscher 1 wenigstens eine Leitung 3, mit deren Hilfe im bestimmungsgemäßen Gebrauch des Wasserwärmetauschers 1 eine Wärmeträgerflüssigkeit transportierbar ist. Im gezeigten Ausführungsbeispiel ist lediglich eine der wenigstens einen Leitung 3 gezeigt. Ebenfalls ist es vorstellbar, dass der Wasserwärmetauscher 1 mehrere der Leitungen 3 (siehe beispielhaft Figur 3) umfasst.

Die wenigstens eine Leitung 3 umfasst wenigstens einen sich zumindest teilweise entlang einer Radialrichtung 4 zwischen einer Innenseite 5 und einem Außenrand 6 des Wasserwärmetauschers 1 erstreckenden Leitungsabschnitt 12, 13. Im gezeigten Ausführungsbeispiel umfasst die Leitung 3 einen ersten Leitungsabschnitt 12 und einen zweiten Leitungsabschnitt 13. Der wenigstens eine Leitungsabschnitt 12, 13 ist vorzugsweise spiralförmig und/oder schneckenförmig, insbesondere um eine Wickelachse 14, gewickelt. Die Wickelachse 14 bestimmt vorzugsweise den Mittelpunkt der Spiralform und/oder der Schneckenform.

Die beiden Leitungsabschnitte 12, 13 sind auf unterschiedlichen Ebenen 10, 11 des Wasserwärmetauschers 1 positioniert, wobei ein erster Leitungsabschnitt 12 auf einer ersten Ebene 10 und ein zweiter Leitungsabschnitt 13 auf einer zweiten Ebene 11 verläuft. Die genannten Ebenen 10, 11 sind vorzugsweise parallel zueinander angeordnet. Zusätzlich oder alternativ verläuft die Wickelachse 14 der mindestens einen Leitung 3 normal zu diesen Ebenen 10, 11.

Im gezeigten Ausführungsbeispiel umfasst die wenigstens eine Leitung 3 beispielhaft zusätzlich einen Übergangsabschnitt 15. Der Übergangsabschnitt 15 verbindet die beiden Leitungsabschnitte 12, 13 und/oder erstreckt sich von der ersten Ebene 10 zur zweiten Ebene 11. Dieser Übergangsabschnitt 15 ist im gezeigten Ausführungsbeispiel im Bereich der Innenseite 5 des Wasserwärmetauschers 1 angeordnet. Alternativ ist es ebenso vorstellbar, dass der Übergangsabschnitt 15 im Bereich des Außenrands 6 des Wasserwärmetauschers 1 angeordnet ist. In der Figur 2 ist weiterhin dargestellt, dass die erste Ebene 10 und die zweite Ebene 11 der mindestens einen Leitung 3 oder der mehreren Leitungen 3 entlang der Hochrichtung 18 des Wasserwärmetauschers 1, insbesondere gleichmäßig, voneinander beabstandet sind.

Der Wasserwärmetauscher 1 umfasst mindestens einen Halter 19, 20 mit mindestens einem Aufnahmeabschnitt 21 für die mindestens eine Leitung 3. Gemäß Figur 2 umfasst der Wasserwärmetauscher 1 zwei der Halter 19, 20 für die beiden Leitungsabschnitte 12, 13. Jeder dieser Halter 19, 20 umfasst wenigstens acht, vorzugsweise wenigstens zehn, beispielsweise zwölf, Aufnahmeabschnitte 21. Diese Aufnahmeabschnitte sind so gestaltet, dass sie eine vielseitige Befestigungsmöglichkeit bieten und damit die Montage und Wartung des Wasserwärmetauschers 1 erleichtern.

Ein erster Halter 19 ist für den ersten Leitungsabschnitt 12 vorgesehen, während ein zweiter Halter 20 für den zweiten Leitungsabschnitt 13 verwendet wird. Im bestimmungsgemäßen Gebrauch des Wasserwärmetauschers 1 sind an dem mindestens einen ersten Halter 19 mindestens einer der zweiten Halter 20 angeordnet, sodass die beiden Leitungsabschnitte 12, 13 mithilfe der Halter 19, 20 entlang der Hochrichtung 18 miteinander verbindbar und/oder befestigbar sind. Jeder der aneinander angeordneten Halter 19, 20 umfasst wenigstens einen der Aufnahmeabschnitte 21, wobei jeder Aufnahmeabschnitt 21 des ersten Halters 19 entlang der Radialrichtung 4 des Wasserwärmetauschers 1 zu den Aufnahmeabschnitten 21 des an den jeweiligen ersten Halter 19 angeordneten zweiten Halters 20 versetzt sind. Für eine übersichtlichere Darstellung sind die Aufnahmeabschnitte 21 der Halter 19, 20 in der Figur 2 lediglich teilweise mit Bezugszeichen versehen.

Zusätzlich oder alternativ umfasst der mindestens eine Halter 19, 20 mindestens einen Durchbruch 23, vorzugsweise mehrere Durchbrüche 23, mit deren Hilfe die Halter 19, 20 zueinander befestigt werden können. Diese Konfiguration bietet den Vorteil, dass eine stabile und zuverlässige Verbindung der Halter 19, 20 entlang der Hochrichtung 18 des Wasserwärmetauschers 1 ermöglicht wird.

Figur 3 zeigt eine schematische perspektivische Darstellung eines Wasserwärmetauschers 1 gemäß einem alternativen Ausführungsbeispiel. In diesem Beispiel umfasst der Wasserwärmetauscher 1 mehrere Leitungen 3. Die Leitungen 3 sind dabei vorzugsweise alle durch wenigstens einen der bereits vorstehend genannten Halter 19, 20 gehalten. Mit Hilfe der Halter 19, 20 sind mehrere der Leitungen 3 entlang der Hochrichtung 18 aneinander angereiht und/oder miteinander befestigt. So kann der Wasserwärmetauscher 1 beliebig viele Leitungen 3 umfassen.

Die wenigstens eine Leitung 3 umfasst einen Vorlauf 7 und einen Rücklauf 8. Der Vorlauf 7 und der Rücklauf 8 sind entweder im Bereich der Innenseite 5 oder, wie im gezeigten Ausführungsbeispiel dargestellt, im Bereich des Außenrands 6 des Wasserwärmetauschers 1 angeordnet.

Gemäß Figur 3 ist der Vorlauf 7 jeweils am ersten Leitungsabschnitt 12 und/oder der Rücklauf 8 jeweils am zweiten Leitungsabschnitt 13 der Leitung(en) 3 angeordnet. Die wenigstens eine Leitung 3 ist mit gleichbleibender Wickelrichtung 9 spiralförmig und/oder schneckenförmig gewickelt, was zur effizienten Nutzung des verfügbaren Raumes und zur Optimierung des Wärmeaustauschprozesses beiträgt. Für eine übersichtlichere Darstellung ist im gezeigten Ausführungsbeispiel lediglich der Vorlauf 7 und der Rücklauf 8 der obersten Leitung 3 mit einem Bezugszeichen versehen. Auch sind lediglich eine der Leitungen 3, einer der ersten Leitungsabschnitt 12, einer der zweiten Leitungsabschnitte 13, einer der ersten Halter 19 und einer der zweiten Halter 20 mit einem Bezugszeichen versehen. Wie aus dem Ausführungsbeispiel der Figur 3 ersichtlich, kann der Wasserwärmetauscher 1 mehrere Leitungen 3, erste Leitungsabschnitte 12, zweite Leitungsabschnitte 13, erste Halter 19 und/oder zweite Halter 20 umfassen. Diese sind vorzugsweise entlang der Hochrichtung 18 aneinander angereiht und/oder angeordnet.

Des Weiteren weist die wenigstens eine Leitung 3, einschließlich der Leitungsabschnitte 12, 13, zumindest teilweise und/oder annäherungsweise eine Gestaltung als archimedische Spirale auf. Diese geometrische Anordnung fördert die gleichmäßige Verteilung der Wärmeträgerflüssigkeit und verbessert somit die Wärmeübertragungseffizienz des Wasserwärmetauschers 1.

In der Figur 3 ist ebenso illustriert, dass der Wasserwärmetauscher 1 wenigstens einen Verteiler 16, 17, insbesondere einen Vorlaufverteiler 16 und/oder einen Rücklaufverteiler 17, aufweist. Diese Verteiler 16, 17 sind so konzipiert, dass sie mehrere der Leitungen 3 miteinander verbinden und sich zumindest teilweise entlang einer in Richtung der Wickelachse 14 erstreckenden Hochrichtung 18 des Wasserwärmetauschers 1 erstrecken. Aus Übersichtsgründen ist der Anschluss der Leitungen 3 mittels des jeweiligen Vorlaufs 7 und Rücklaufs 8 nicht dargestellt. Diese Anordnung ermöglicht eine effiziente Distribution und Sammlung der Wärmeträgerflüssigkeit innerhalb des Systems.

Weiterhin sind jedem der Leitungsabschnitte 12, 13 wenigstens drei, vorzugsweise wenigstens sechs, Halter 19, 20 zugeordnet. Diese Halter 19, 20 tragen zur strukturellen Integrität und zur präzisen Positionierung der Leitungen 3 bei, indem sie die Leitungen 3 sicher und stabil in der vorgesehenen Form halten. Zusätzlich oder alternativ können so mehrere Leitungen 3 zueinander gehalten und/oder befestigt werden.

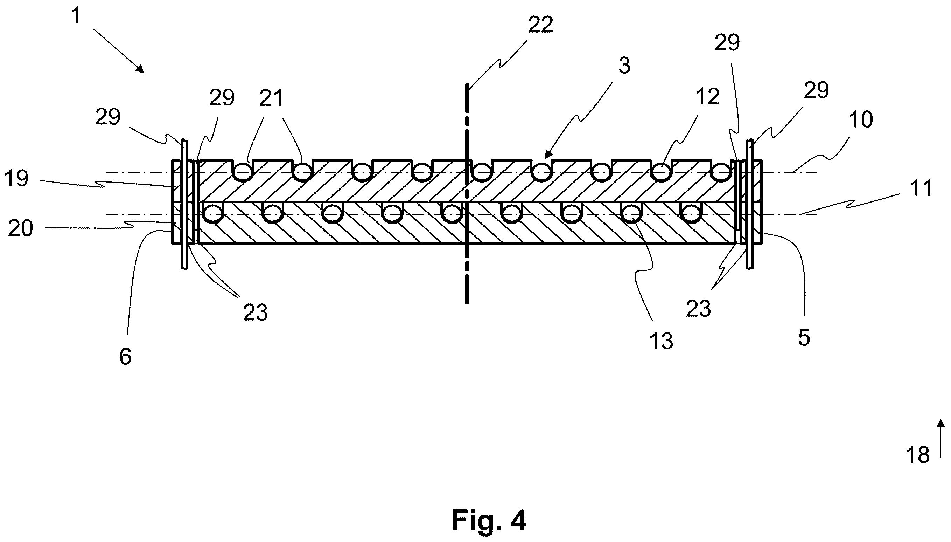

Das in Figur 4 dargestellte Ausführungsbeispiel zeigt eine schematische, geschnittene Detailansicht eines Wasserwärmetauschers 1. In diesem Ausführungsbeispiel werden die Merkmale der Halter 19, 20 detaillierter beschrieben. Es sei erneut darauf hingewiesen, dass die hierin beschriebenen Merkmale in jedem der vorangegangenen Ausführungsbeispiele vorhanden sein können.

Wie aus dem Ausführungsbeispiel der Figur 4 hervorgeht, umfasst der Wasserwärmetauscher 1 den wenigstens einen Halter 19, 20. Die Aufnahmeabschnitte 21 des Halters 19, 20 sind zu einer Mittelebene 22 des Halters 19, 20 asymmetrisch ausgebildet. Diese Asymmetrie erlaubt es, dass der erste Halter 19 und der zweite Halter 20 als Gleichteil bereitgestellt werden können. Dies bedeutet, dass der Halter 19, 20 als sogenanntes Wendeteil fungiert, das in einer Ausrichtung den ersten Halter 19 und in der anderen Ausrichtung den zweiten Halter 20 bereitstellt. Durch diese Konfiguration wird eine effiziente Produktion und eine vereinfachte Lagerung ermöglicht, da weniger unterschiedliche Teile benötigt werden.

Des Weiteren umfasst der wenigstens eine Halter 19, 20 den wenigstens einen Durchbruch 23, vorzugsweise mehrere Durchbrüche 23. Diese Durchbrüche sind so konzipiert, dass sie die Halter 19, 20 zueinander befestigen können. Zudem sind die Durchbrüche 23 (im Gegensatz zu den Aufnahmeabschnitten 21) zu der Mittelebene 22 symmetrisch ausgebildet. Dadurch wird beim Befestigen des ersten Halters 19 an dem zweiten Halter 20 die versetzte Anordnung der Aufnahmeabschnitte 21 erzielt. Diese versetze Anordnung der Aufnahmeabschnitte 21 gewährleistet, dass die wenigstens eine Leitung 3 mit gleichbleibender Wickelrichtung 9 (siehe Figur 3) möglichst schonend gewickelt werden kann.

In der Figur 4 ist zudem gezeigt, dass die wenigstens zwei Halter 19, 20 mit Hilfe dieser mehreren Durchbrüche 23 mittels Befestigungselementen 29, insbesondere Schrauben und/oder Gewindestangen, zueinander befestigt werden. Im gezeigten Ausführungsbeispiel sind die wenigstens zwei Halter 19, 20 mit dem als Schraube ausgebildeten Befestigungselement 29 zueinander befestigt. Zusätzlich gewährleistet das als Gewindestange ausgebildete Befestigungselement 29, dass mehrere der Halter 19, 20 miteinander verbunden werden können. So kann es in der Fertigung vorteilhaft sein, dass jeweils zwei der Halter 19, 20, welche die eine Leitung 3 aufnehmen, miteinander durch das als Schraube ausgebildetes Befestigungselement 29 verbunden werden. Die weiteren Halter 19, 20 mit den weiteren Leitungen 3 werden anschließend mittels dem als Gewindestange ausgebildeten Befestigungselement 29 verbunden und/oder befestigt.

Zusätzlich oder alternativ ist es vorstellbar, dass jeder der Halter 19, 20 zum benachbarten Halter 20, 19 mittels dem als Schraube ausgebildeten Befestigungselement 29 verbunden wird. Hierbei können die Schrauben jeweils abwechselnd durch die beiden Durchbrüche 23 des Halters 19, 20 geführt werden. Die Anordnung der Durchbrüche ermöglicht eine flexible Befestigungsmöglichkeit, bei der Schrauben abwechselnd in den Durchbrüchen eingesetzt werden können.

Diese technischen Merkmale des Haltersystems im Wasserwärmetauscher 1 tragen nicht nur zur Stabilität der Konstruktion, sondern auch zur Modularität und Wartungsfreundlichkeit des Gesamtsystems bei. Die Verwendung von Wendeteilen reduziert die Komplexität der Bauteile und erleichtert den Zusammenbau und die Wartung des Wasserwärmetauschers 1, indem es die Anzahl der unterschiedlichen Teile minimiert und die Montage vereinfacht.

### Bezugszeichenliste

- 1: Wasserwärmetauscher
- 2: Energiespeicher
- 3: Leitung
- 4: Radialrichtung
- 5: Innenseite
- 6: Außenrand
- 7: Vorlauf
- 8: Rücklauf
- 9: Wickelrichtung
- 10: erste Ebene
- 11: zweite Ebene
- 12: erster Leitungsabschnitt
- 13: zweiter Leitungsabschnitt
- 14: Wickelachse
- 15: Übergangsabschnitt
- 16: Vorlaufverteiler
- 17: Rücklaufverteiler
- 18: Hochrichtung
- 19: erster Halter
- 20: zweiter Halter
- 21: Aufnahmeabschnitt
- 22: Mittelebene
- 23: Durchbruch
- 24: System
- 25: Energiewandler
- 26: Behälter
- 27: Luftwärmetauscher
- 28: Hydraulikmodul
- 29: Befestigungselement

## Patentansprüche

1. Wasserwärmetauscher (1) für einen Energiespeicher (2),
mit wenigstens einer Leitung (3), mit deren Hilfe im bestimmungsgemäßen Gebrauch des Wasserwärmetauschers (1) eine Wärmeträgerflüssigkeit transportierbar ist,
wobei die wenigstens eine Leitung (3) wenigstens einen sich zumindest teilweise entlang einer Radialrichtung (4) zwischen einer Innenseite (5) und einem Außenrand (6) des Wasserwärmetauschers (1) erstreckenden Leitungsabschnitt (12, 13) umfasst, und
wobei die wenigstens eine Leitung (3) einen Vorlauf (7) und einen Rücklauf (8) umfasst, die im Bereich der Innenseite (5) oder des Außenrands (6) angeordnet sind,
**dadurch gekennzeichnet,**
- **dass** die wenigstens eine Leitung (3) mit gleichbleibender Wickelrichtung (9) spiralförmig und/oder schneckenförmig gewickelt ist und/oder
- **dass** die wenigstens eine Leitung (3) wenigstens zwei der Leitungsabschnitte (12, 13) umfasst, wobei die wenigstens zwei Leitungsabschnitte (12, 13) auf unterschiedlichen Ebenen (10, 11) des Wasserwärmetauschers (1) angeordnet sind.

2. Wasserwärmetauscher nach dem vorangegangenen Anspruch, **dadurch gekennzeichnet, dass** der wenigstens eine Leitungsabschnitt (12, 13) und/oder die wenigstens eine Leitung (3) zumindest teilweise und/oder annäherungsweise als archimedische Spirale ausgebildet ist.

3. Wasserwärmetauscher nach einem der vorangegangenen Ansprüche, **dadurch gekennzeichnet, dass** ein erster Leitungsabschnitt (12) der wenigstens zwei Leitungsabschnitte (12, 13) auf einer ersten Ebene (10) und/oder ein zweiter Leitungsabschnitt (13) der wenigstens zwei Leitungsabschnitte (12, 13) auf einer zweiten Ebene (11) verläuft.

4. Wasserwärmetauscher nach einem der vorangegangenen Ansprüche, **dadurch gekennzeichnet, dass** die unterschiedlichen Ebenen (10, 11), insbesondere die erste Ebene (10) und die zweite Ebene (11), parallel zueinander angeordnet sind und/oder eine Wickelachse (14) der wenigstens einen Leitung (3) normal zu der wenigstens einen Ebene (10, 11) verläuft.

5. Wasserwärmetauscher nach einem der vorangegangenen Ansprüche, **dadurch gekennzeichnet, dass** die wenigstens zwei Leitungsabschnitte (12, 13) mit einem Übergangsabschnitt (15) verbunden sind, wobei sich der Übergangsabschnitt (15) vorzugsweise von der ersten Ebene (10) zur zweiten Ebene (11) erstreckt.

6. Wasserwärmetauscher nach einem der vorangegangenen Ansprüche, **dadurch gekennzeichnet, dass** der Übergangsabschnitt (15) im Bereich der Innenseite (5) oder des Außenrands (6) des Wasserwärmetauschers (1) angeordnet ist.

7. Wasserwärmetauscher nach einem der vorangegangenen Ansprüche, **dadurch gekennzeichnet, dass** der Wasserwärmetauscher (1) wenigstens einen Verteiler (16, 17), insbesondere einen Vorlaufverteiler (16) und/oder einen Rücklaufverteiler (17), umfasst

8. Wasserwärmetauscher nach einem der vorangegangenen Ansprüche, **dadurch gekennzeichnet, dass** der wenigstens eine Verteiler (16, 17) mehrere der Leitungen (3) miteinander verbindet und/oder sich zumindest teilweise entlang einer in Richtung der Wickelachse (14) erstreckenden Hochrichtung (18) des Wasserwärmetauschers (1) erstreckt.

9. Wasserwärmetauscher nach einem der vorangegangenen Ansprüche, **dadurch gekennzeichnet, dass** die erste Ebene (10) und die zweite Ebene (11) der wenigstens einen Leitung (3) oder mehrerer der Leitungen (3) entlang der Hochrichtung (18) des Wasserwärmetauschers (1), insbesondere gleichmäßig, voneinander beabstandet sind.

10. Wasserwärmetauscher nach einem der vorangegangenen Ansprüche, **dadurch gekennzeichnet, dass** der Wasserwärmetauscher (1) wenigstens einen Halter (19, 20) mit wenigstens einem Aufnahmeabschnitt (21) für die wenigstens eine Leitung (3) umfasst.

11. Wasserwärmetauscher nach einem der vorangegangenen Ansprüche, **dadurch gekennzeichnet, dass** der Wasserwärmetauscher (1) wenigstens zwei der Halter (19, 20) für die wenigstens zwei Leitungsabschnitte (12, 13), insbesondere wenigstens einen ersten Halter (19) für den wenigstens einen ersten Leitungsabschnitt (12) und wenigstens einen zweiten Halter (20) für den wenigstens einen zweiten Leitungsabschnitt (13), umfasst.

12. Wasserwärmetauscher nach einem der vorangegangenen Ansprüche, **dadurch gekennzeichnet, dass** im bestimmungsgemäßen Gebrauch des Wasserwärmetauschers (1) an dem wenigstens einen ersten Halter (19) wenigstens einer der zweiten Halter (20) angeordnet ist, so dass wenigstens zwei Leitungsabschnitte (12, 13) mit Hilfe der Halter (19, 20) entlang der Hochrichtung (18) miteinander verbindbar und/oder befestigbar sind.

13. Wasserwärmetauscher nach einem der vorangegangenen Ansprüche, **dadurch gekennzeichnet, dass** jeder der aneinander angeordneten Halter (19, 20) wenigstens einen der Aufnahmeabschnitte (21) umfasst, wobei vorzugsweise jeder Aufnahmeabschnitt (21) des ersten Halters (19) entlang der Radialrichtung (4) des Wasserwärmetauschers (1) zu den Aufnahmeabschnitten (21) des an den jeweiligen ersten Halter (19) angeordneten zweiten Halters (20) versetzt sind.

14. Wasserwärmetauscher nach einem der vorangegangenen Ansprüche, **dadurch gekennzeichnet, dass** der wenigstens eine Halter (19, 20), insbesondere die Aufnahmeabschnitte (21) des wenigstens einen Halters (19, 20), zu einer Mittelebene (22) des Halters (19, 20) asymmetrisch ausgebildet ist und/oder der wenigstens eine Halter (19, 20) wenigstens einen Durchbruch (23), vorzugsweise mehrere Durchbrüche (23), umfasst, mit dessen Hilfe die Halter (19, 20) zueinander befestigt werden können.

15. Energiespeicher (2) mit wenigstens einem Wasserwärmetauscher (1), und
mit wenigstens einem Behälter (26),
wobei der Wasserwärmetauscher (1) im bestimmungsgemäßen Gebrauch des Energiespeichers (2) in einer im Behälter (26) aufgenommenen Flüssigkeit angeordnet ist, **dadurch gekennzeichnet,**
**dass** der Wasserwärmetauscher (1) nach einem oder mehreren der vorherigen Ansprüche ausgebildet ist.
